# EUROPÄISCHE PATENTSCHRIFT

(11) **EP 0 856 222 B1**
(45) Veröffentlichungstag und Bekanntmachung des Hinweises auf die Patenterteilung: **01.03.2000**
(21) Anmeldenummer: 96930964.0
(22) Anmeldetag: 24.08.1996
(51) Int. Cl.: H04N 5/217

(54) **VORRICHTUNG ZUR BESEITIGUNG DES SMEAR-EFFEKTES BEI CCD-KAMERAS**
DEVICE FOR ELIMINATING THE SMEAR EFFECT IN CCD CAMERAS
DISPOSITIF POUR ELIMINER L'EFFET DE MARBRURE D'IMAGE D'UNE CAMERA CCD

(30) Priorität: 19.10.1995 DE 19538909
(43) Veröffentlichungstag der Anmeldung: 05.08.1998
(73) Patentinhaber: PLETTAC AG, 58840 Plettenberg (DE)
(72) Erfinder: SCHNELL, Harald, D-90762 Fürth (DE)
(74) Vertreter: Pröll, Jürgen, Dipl.-Ing. (FH)
(86) Internationale Anmeldenummer: EP9603739
(87) Internationale Veröffentlichungsnummer: WO9715139

(56) Entgegenhaltungen:
- DE-A- 3 442 647
- GB-A- 2 151 430
- PATENT ABSTRACTS OF JAPAN vol. 008, no. 078 (E-237), 10.April 1984 & JP,A,59 000275 (SONY KK), 5.Januar 1984,

## Beschreibung

Die Erfindung betrifft eine Vorrichtung zur Beseitigung des Smear-Effektes bei CCD-Kameras nach dem Oberbegriff des Anspruches 1.

Aus der deutschen Offenlegungsschrift DE-OS 32 31295 ist eine Fernsehaufnahmeanordnung mit einem Feststoffbildaufnehmer bekannt, bei dem der Feststoffbildaufnehmer nach dem Rasterübertragungssystem ausgelesen wird. Eine Informationsausschmierung durch helle Bildbereiche wird korrigiert, indem von einem lichtdurchlässigem Streifen auf dem Bildaufnahmeteil des Aufnehmers eine Signalausschmierinformation entnommen wird. Das Ausschmierbildsignal pro Vertikalperiode wird in einer ersten Speicheranordnung, die zeilenperiodisch auslesbar ist, gespeichert und periodisch von dem zu korrigierenden Bildsignal subtrahiert. Zur verbesserten Korrektur wird weiterhin eine zweite Speicheranordnung vorgesehen, mittels derer eine Signalmittelung über mehrere Vertikalperioden durchgeführt wird und es wird ein weiteres Ausschmierbildsignal gespeichert, wodurch in der oberen und unteren Bildhälfte unterschiedliche Ausschmierkorrekturen durchgeführt werden können.

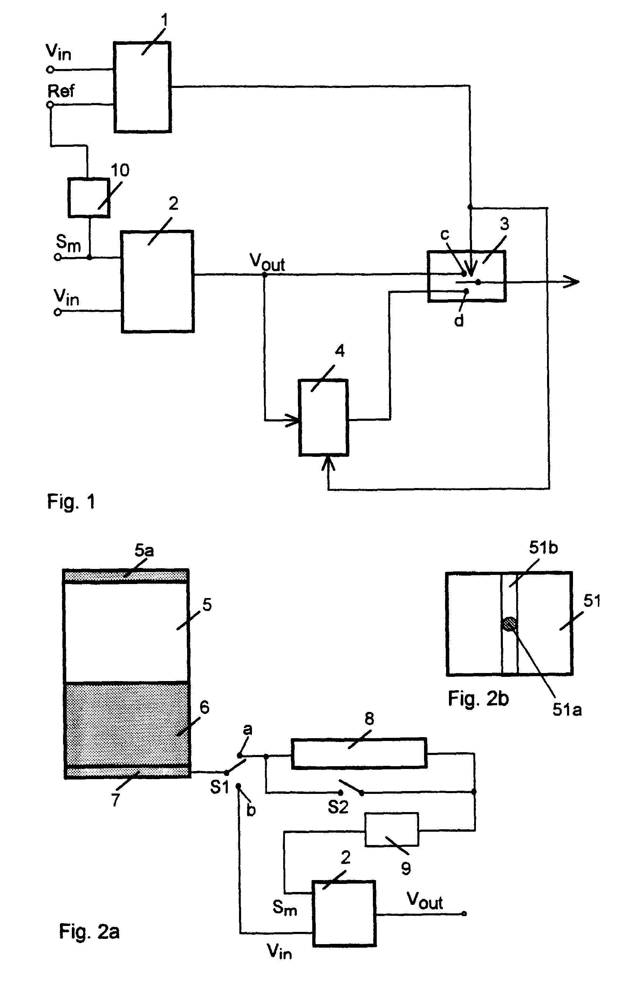

Aus der europäischen Offenlegungsschrift EP-A 0 089 203 ist eine Vorrichtung zur Beseitigung bzw. Reduzierung des Smear-Effektes bei CCD-Kameras bekannt, wie sie in Figur 2 angegeben ist.

Figur 2a zeigt einen CCD-Aufnahmesensor mit einem Photosensorbereich 5, einem Speicherbereich 6 und einem Register 7. Im Photosensorbereich 5 wird ein Ladungsbild erzeugt, das nach jedem Halbbild in den Speicherbereich 6 übertragen und durch das Register 7 in einen seriellen Datenstrom umgewandelt wird.
Bei dem Ladungstransfer vom Photosensorbereich 5 in den Speicherbereich 6 kann der sogenannte Smear-Effekt auftreten, wenn im Ladungsbild ein sehr heller Bildbereich enthalten ist und beim Ladungstransfer in vertikaler Richtung die Einzelladungen durch den hellen Bildbereich beeinflußt werden. Bei der Wiedergabe eines derartigen Bildes nach Figur 2b verursacht beispielsweise ein kreisrunder heller Fleck 51 a einen beeinflußten Bereich 51 b, der über den gesamten Vertikalbereich geht und eine horizontale Ausdehnung aufweist, die dem Durchmesser des hellen Bildbereiches 51a entspricht.
Zur Reduzierung des Smear-Effektes wird im Sensorbereich 5 ein Maskenbereich 5a vorgesehen, auf den kein Licht einfällt. Zu den Zeitpunkten, an denen das Signal dieses Maskenbereiches 5a aus dem Register 7 ausgelesen wird, wird ein Schalter S1 in die Stellung a gebracht und der Schalter S2 wird geöffnet, so daß der Inhalt des Registers in den Speicher 8 eingelesen wird. Während der übrigen Zeit befindet sich der Schalter S1 in Stellung b, der Schalter S2 ist eingeschaltet und das Signal aus dem Register 7 wird einer Einheit 2 zur Bildung einer Differenz zugeführt. Dem zweiten Eingang der Einheit 2 wird das Signal aus dem Speicher 8, das die Smear-Komponente beinhaltet, zugeführt. In der Einheit 2 wird also jeweils die Differenz aus dem Videosignal, das auch die Smear-Komponente beinhaltet, und der Smear-Komponente selbst gebildet, so daß am Ausgang dieser Schaltung das Videosignal ohne Smear-Komponente zur weiteren Bearbeitung zur Verfügung steht.
Neben der Smear-Komponente enthält das aus dem Sensorbereich 5a abgeleitete und im Speicher 8 abgelegte Signal auch eine Rauschkomponente, die mittels einer Schaltungseinheit 9 eliminiert werden kann.

Der Nachteil der bekannten Vorrichtung besteht darin, daß bei hohen Signalpegeln des Videosignals durch die Differenzbildung aus dem Videosignal und dem Smear-Signal eine Überkompensation entsteht, die dazu führt, daß der Smear-Bereich bei der Anzeige auf einem Monitor dunkler erscheint.

Aus DE-A-3442647 ist ein CCD-Bildwandler bekannt. Der CCD-Bildwandler weist ein CCD-Element mit einer Vielzahl von fotoelektrischen Wandlern auf. Diese fluchten vertikal und horizontal zueinander, wobei mindestens eine horizontale Zeile maskiert ist. Das CCD-Element erzeugt unmaskierte horizontale Zeilensignale, die von den unmaskierten horizontalen Zeilen abgezogen werden, sowie ein maskiertes horizontales Zeilensignal, das von der maskierten horizontalen Zeile abgezogen wird. Im weiteren ist ein Zeilenspeicher zum Abspeichern des maskierten horizontalen Zeilensignals und zum wiederholten seriellen Reproduzieren des maskierten horizontalen Zeilensignals vorgesehen. Außerdem ist ein Subtrahierwerk zum subtrahieren des maskierten horizontalen Zeilensignals von jedem der unmaskierten horizontalen Zeilensignale und zum Erzeugen eines subtrahierten Signals vorhanden. Des weiteren weist der CCD-Bildwandler eine Konstantspannungsquelle zum Erzeugen einer Schwellenspannung auf. Es ist im weiteren ein Komparator zum Vergleichen des unmaskierten horizontalen Zeilensignals mit der Schwellenspannung und zur Erzeugung eines ersten Signals vorgesehen, wenn das unmaskierte horizontale Zeilensignal unterhalb der Schwellenspannung liegt und eines zweiten Signals, wenn es oberhalb der Schwellenspannung liegt. Letztlich ist eine Schaltervorrichtung, die mit dem Komparator verbunden ist, vorgesehen. Diese dient zum Durchlassen des subtrahierten Signals, wenn das erste Signal erzeugt wird, und des unmaskierten horizontalen Zeilensignals, wenn das zweite Signal erzeugt wird.

Es ist daher Aufgabe der vorliegenden Erfindung, eine Vorrichtung zur Beseitigung des Smear-Effektes anzugeben, bei der eine Überkompensation im Smear-Bereich vermieden wird.

Diese Aufgabe wird ausgehend von einer Vorrichtung nach dem Oberbegriff des Anspruches 1 durch die kennzeichnenden Merkmale des Anspruches 1 gelöst.
Vorteilhafte Ausgestaltungen der Erfindung sind in den abhängigen Ansprüchen angegeben.

Gemäß der Erfindung wird der Pegel des Videosignals mit einem Referenzwert verglichen und in Abhängigkeit des Vergleichsergebnisses wird ein Schalter derart angesteuert, daß bei einem Videosignalpegel, der kleiner ist als der Referenzpegel, das Differenzsignal aus dem Videosignal und dem Smear-Signal durchgeschaltet wird und bei einem Videosignalpegel, der größer ist als das Referenzsignal ein in einem Zwischenspeicher abgelegter Wert des Differenzsignals durchgeschaltet wird.

Durch die erfindungsgemäße Vorrichtung wird erreicht, daß bei hohen Signalpegeln des Videosignals eine Überkompensation durch die Smear-Reduzierung vermieden wird.

Gemäß einer vorteilhaften Ausgestaltung der Erfindung wird der Zwischenspeicher durch den Komparator so angesteuert, daß das Ausgangssignal der Einheit zur Differenzbildung in den Zwischenspeicher eingeschrieben wird, wenn der Pegel des Videosignals kleiner ist als der Referenzpegel.
Dadurch wird erreicht, daß jeweils das in einer Zeile zuletzt dargestellte Bildpunktsignal eingespeichert und das Signal im Smear-Bereich durch das zuletzt dargestellte Bildpunktsignal ersetzt wird, wenn der Signalpegel des Videosignals über dem Referenzpegel liegt.

Eine weitere vorteilhafte Ausgestaltung der Erfindung sieht vor, daß eine Schaltungseinheit vorgesehen ist, die den Smear-Pegel bestimmt und in Abhängigkeit dieses Smear-Pegels einen Referenzpegel berechnet, der dann an den Komparator als Referenzpegel gelegt wird.

Im folgenden wird die Erfindung an Hand der Figur 1 erläutert.
Diese Figur zeigt einen Komparator 1 mit den beiden Eingängen Vᵢₙ und Ref, an denen das Videoeingangssignal und ein Referenzsignal anliegen. Das Ausgangssignal des Komparators 1 ist mit dem Steuereingang eines Schalters 3 und mit dem Steuereingang eines Zwischenspeichers 4 verbunden. Der Schalter 3 weist zwei Schaltpunkte c und d auf, wobei am Schaltpunkt c das Ausgangssignal der Einheit 2 zur Bildung der Differenz aus dem Videosignal Vᵢₙ und dem Smear-Signal Sₘ, das beispielsweise durch eine Schaltung nach Figur 2 gewonnen wird, und am Schaltpunkt d das Ausgangssignal des Zwischenspeichers 4 anliegen. Am Eingang des Zwischenspeichers 4 liegt das Ausgangssignal der Einheit 2 zur Differenzbildung an. Der Zwischenspeicher 4 hat die Aufgabe, das Signal am Ausgang der Einheit 2 zu verzögern. In vorteilhafter Weise wird der Zwischenspeicher 4 durch den Komparator 1 in der Weise angesteuert, daß das Ausgangssignal der Einheit 2 nur dann zwischengespeichert wird, wenn der Pegel des Videoeingangssignals Vᵢₙ kleiner ist als der des Referenzsignals Ref.
Der Schalter 3 wird durch den Komparator 1 so angesteuert, daß der Schalter in Stellung c geschaltet wird, wenn das Eingangssignal Vᵢₙ kleiner ist als der Referenzpegel und in Stellung d geschaltet wird, wenn das Eingangssignal Vᵢₙ größer ist als der Referenzpegel Ref.

Die Vorrichtung nach Figur 1 enthält weiterhin eine Schaltungseinheit 10, mit der der Smear-Pegel bestimmt wird und die in Abhängigkeit dieses Smear-Pegels einen Referenzpegel berechnet, der dann an den Komparator als Referenzpegel Ref gelegt wird.

Mit der erfindungsgemäßen Vorrichtung wird bei hohen Signalpegeln des Videosignals eine Überkompensation durch die Smear-Reduzierung vermieden.
So wird beispielsweise bei der bekannten Vorrichtung zur Beseitigung des Smear-Effektes nach Figur 2 bei einem Signalpegel von 85% des Maximalpegels und einer Smear-Komponente von 40% des Signalpegels ein theoretischer Pegelwert von 125% erreicht. Da ein Pegelwert von über 100% abgeschnitten wird, wird durch die Differenzbildung bei der Reduzierung des Smear-Effektes ein Signalpegel von 60% erzeugt. Es werden also 25% des ursprünglichen Signalpegels abgeschnitten.
Durch die erfindungsgemäße Vorrichtung kann ein Referenzwert von beispielsweise 70% des maximalen Pegels vorgegeben werden. Bei einem Signalpegel von 85% des Maximalpegels wird der zuletzt in den Speicher 4 eingelesene Wert aus dem Speicher ausgelesen und an den Schalter 3 gelegt, wodurch die Überkompensation verringert wird.

## Patentansprüche

1. Vorrichtung zur Beseitung des Smear-Effektes bei CCD-Kameras mit einem Fotosensorbereich (5), der einen Maskenbereich (5a) zu Detektion eines Smear-Signals enthält, einem Speicherbereich (6), einem Register (7), einem Speicher (8) zur Speicherung des Smear-Signals, einer Einheit (2) zur Bildung der Differenz aus dem Videosignal und dem Smear-Signal und einen Komparator (1) zum Vergleichen des Videosignalpegels (Vin) mit einem Referenzpegel (Ref),
**gekennzeichnet durch**
- einen Zwischenspeicher (4) zur Zwischenspeicherung des Ausgangssignales der Einheit (2) zur Differenzbildung, und
- einen Schalter (3) zum Durchschalten des Ausgangssignales der Einheit (2) zur Differenzbildung oder des Inhaltes des Zwischenspeichers (4), wobei der Inhalt des Zwischenspeichers (4) durchgeschaltet wird, wenn der Videosignalpegel (Vin) größer ist als der Referenzpegel (Ref).

2. Vorrichtung nach Anspruch 1,
**dadurch gekennzeichnet, dass**
der Zwischenspeicher (4) so ausgeführt ist, daß er durch den Komparator (1) in der Weise angesteuert wird, daß das Ausgangssignal (Vout) der Einheit (2) zur Differenzbildung eingeschrieben wird, wenn der Pegel des Videosignals (Vin) kleiner ist, als der Referenzpegel (Ref).

3. Vorrichtung nach Anspruch 1 oder 2,
**dadurch gekennzeichnet, dass**
eine Schaltungsvorrichtung (10) vorgesehen ist, die den Smear-Pegel bestimmt und in Abhängigkeit dieses Smear-Pegels einen Referenzpegel berechnet, der dann an den Komparator (1) als Referenzpegel anliegt.

## Claims

1. Device for eliminating the smear effect in CCD cameras, comprising a photosensor region (5) which contains a mask region (5a) for detecting a smear signal, a memory region (6), a register (7), a memory (8) for storing the smear signal, a unit (2) for generating the difference between the video signal and the smear signal and a comparator (1) for comparing the video signal level (Vin) with a reference level (Ref),
characterized by
- a temporary memory (4) for temporarily storing the output signal of the difference generating unit (2), and
- a switch (3) for connecting through the output signal of the-difference generating unit (2) or the content of the temporary memory (4), the content of the temporary memory (4) being connected through if the video signal level (Vin) is higher than the reference level (Ref).

2. Device according to Claim 1, characterized in that the temporary memory (4) is designed so that it is controlled by the comparator (1) in such a way that the output signal (Vout) of the difference generating unit (2) is written in if the level of the video signal (Vin) is lower than the reference level (Ref).

3. Device according to Claim 1 or 2, characterized in that a circuit device (10) is provided which determines the smear level and calculates, as a function of said smear level, a reference level which is then applied to the comparator (1) as reference level.

## Revendications

1. Dispositif pour éliminer l'effet de marbrure d'image de caméras CCD, comprenant une plage de photodétection (5), qui contient une plage de masquage (Sa) pour la détection d'un signal de marbrure, une plage de mémorisation (6), un registre (7), une mémoire (8) pour mémoriser le signal de marbrure, une unité (2) pour former une différence à partir du signal vidéo et du signal de marbrure et un comparateur (1) pour comparer le niveau du signal vidéo (Vin) à un niveau de référence (Réf),
caractérisé par
- une mémoire tampon (4) pour la mémorisation intermédiaire du signal de sortie de l'unité (2) de formation de différence, et
- un commutateur (3) pour connecter le signal de sortie de l'unité (2) de formation de différence ou du contenu de la mémoire tampon (4), le contenu de la mémoire tampon (4) étant connecté lorsque le niveau du signal vidéo (Vin) est plus grand que le niveau de référence (Réf).

2. Dispositif selon la revendication 1,
caractérisé en ce que
la mémoire tampon (4) est aménagée de manière à être commandée par le comparateur (1) afin de transcrire le signal de sortie (Vout) de l'unité (2) de formation de différence lorsque le niveau du signal vidéo (Vin) est plus petit que le niveau de référence (Réf).

3. Dispositif selon la revendication 1 ou 2,
caractérisé en ce que
il est prévu un dispositif de commutation (10) qui définit le niveau de marbrure et calcule, en fonction de ce niveau de marbrure, un niveau de référence qui s'applique ensuite au comparateur (1) comme niveau de référence.
